# EUROPÄISCHE PATENTSCHRIFT

(11) **EP 0 773 860 B1**
(45) Veröffentlichungstag und Bekanntmachung des Hinweises auf die Patenterteilung: **07.08.2002**
(21) Anmeldenummer: 96916045.6
(22) Anmeldetag: 11.05.1996
(51) Int. Cl.: B29C 43/18, B29C 43/14, B29C 45/14, B29C 45/16, B29C 31/04, B29C 69/02, B60R 13/02

(54) **VORRICHTUNG ZUM HERSTELLEN VON DÜNNWANDIGEN LAMINIERTEN FORMTEILEN**
DEVICE FOR MANUFACTURING THIN-WALLED LAMINATED MOULDINGS
DISPOSITIF DE FABRICATION DE PIECES MOULEES STRATIFIEES A PAROIS MINCES

(30) Priorität: 17.05.1995 DE 19518143
(43) Veröffentlichungstag der Anmeldung: 21.05.1997
(73) Patentinhaber: Krauss-Maffei Kunststofftechnik GmbH, 80997 München (DE)
(72) Erfinder: Rehm, Guido, 94032 Passau (DE); Zweig, Konrad, 86157 Augsburg (DE)
(74) Vertreter: Zollner, Richard
(86) Internationale Anmeldenummer: EP9602027
(87) Internationale Veröffentlichungsnummer: WO9636474

(56) Entgegenhaltungen:
- EP-A- 0 253 909
- DE-A- 4 336 878
- DE-A- 4 428 626
- DE-A- 4 443 145
- US-A- 4 335 068
- US-A- 4 873 045
- PATENT ABSTRACTS OF JAPAN vol. 012, no. 208 (M-709), 15.Juni 1988 & JP,A,63 011312 (MEIWA SANGYO KK), 18.Januar 1988,
- PATENT ABSTRACTS OF JAPAN vol. 012, no. 442 (M-766), 21.November 1988 & JP,A,63 176118 (YOSHIDA KOGYO KK), 20.Juli 1988,

## Beschreibung

Die Erfindung betrifft eine Vorrichtung zum Herstellen von dünnwandigen und teilweise laminierten Formteilen aus einer Grundschicht aus thermoplastischem Kunststoffmaterial und mit der Grundschicht in Teilbereichen verpresster Deckschicht aus vorgefertigtem flächigen Deckschichtmaterial mittels eines eine untere und eine obere Formhälfte aufweisenden Formwerkzeugs, wobei die Schmelze aus thermoplastischem Kunststoffmaterial für die Grundschicht zum Verpressen mit der Deckschicht in dünnwandiger flächiger Form in das geöffnete Formwerkzeug eingebracht wird.
Eine Vorrichtung dieser Art ist aus der DE 43 36 878 A1 bekannt, bei das vorgeformte Oberflächenschichtelement in den Teilbereich der Formkavität einer Formhälfte eingelegt wird. Anschließend wird in den Zwischenraum zwischen dem Oberflächenschichtelement und der anderen Formhälfte eine flächig strukturierte Schmelzemenge aus thermoplastischem Kunststoff eingebracht. Beim Schließen der beiden Formhälften erfolgt ein Verpressen der Schmelzemenge mit dem Oberflächenschichtelement, wobei vor dem Aushärten der Schmelzemenge die übrigen, nicht mit dem Oberflächenschichtelement belegten Teilbereiche der Formkavität in einem herkömmlichen Spritzvorgang mit weiterer Schmelzemenge befüllt werden. Nach dem Aushärten der gesamten Schmelzemenge ist ein flächiges Spritzgießteil geschaffen, das in einem Teilbereich ein Oberflächenschichtelement mit z.B. einer strukturierten Außenhaut aufweist und in den übrigen Teilbereichen wie ein herkömmliches flächiges Spritzgießteil gestaltet ist.

Es ist die Aufgabe der vorliegenden Erfindung, eine Vorrichtung zu schaffen, mit der die Belegung mit flächig strukturierter Schmelzemenge für einen oder mehrere Teilbereiche einer Formkavität und das Einspritzen von weiterer Schmelzemenge in die übrigen Teilbereiche der Formkavität in herkömmlicher Spritzgießtechnik mit einfachen Mitteln bewerkstelligt werden kann.

Diese Aufgabe wird durch die in Anspruch 1 angegebene Vorrichtung gelöst. Die abhängigen Ansprüche beziehen sich auf vorteilhafte Merkmale der Erfindung.

Bei der erfindungsgemäßen Kombination einer herkömmlichen Spritzdüse mit einer Schlitzdüse in einem Spritzkopf können mit lediglich einem einfachen mechanischen Bauteil die Funktion der Erzeugung einer flächig strukturierten Schmelzemenge und deren Anbringung gegenüber der Rückseite eines vorgeformten Oberflächenschichtelementes in einem Teilbereich der Formkavität eines Spritzgießwerkzeuges und die Funktion der Einspritzens von Schmelze in die übrigen Teilbereiche der Formkavität ohne großen Aufwand erfüllt werden.

Vorzugsweise, insbesondere bei weiter auseinanderliegenden Teilbereichen von nicht mit Oberflächenschichtelementen belegten Formkavitäten sind die Schmelzekanäle als Heißkanäle ausgebildet, wodurch sichergestellt werden kann, dass die im herkömmlichen Spritzverfahren hergestellten Teilflächen mit der erforderlichen Oberflächenqualität ausgeformt werden können.

Ausführungsformen der Erfindungen werden im folgenden anhand der Zeichnung näher erläutert. Es zeigen:
- Fig.1: ein dünnwandiges flächiges Formteil mit einer mit einer Deckschicht laminierten Teilfläche und einer unlaminierten Teilfläche,
- Fig. 2: das geöffnete Formwerkzeug mit einer oberen und einer unteren Formhälfte entsprechend der Schnittansicht II-II in Fig. 1,
- Fig. 3: das geöffnete Formwerkzeug nach Fig. 2 in einer Schnittansicht III-III in Fig. 1,
- Fig. 4: das geöffnete Formwerkzeug nach Fig. 2 mit angesetzter Schlitzdüse bei der Ablage eines breiten Stranges für die zu verpressende Grundschicht,
- Fig. 5: das geöffnete Formwerkzeug nach Fig. 3 mit abgelegtem breiten Grundschichtstrang,
- Fig. 6: das geschlossene Formwerkzeug mit angesetzter Spritzdüse und verzweigtem Schmelzekanal,
- Fig. 7: das geschlossene Formwerkzeug mit mit der Grundschicht verpreßter Deckschicht und teilweise gefülltem Formhohlraum für die unlaminierte Teilfläche,
- Fig. 8: ein Plastifizieraggregat mit zu einer Spritzdüse und einer Schlitzdüse verzweigtem Schmelzekanal,
- Fig. 9: einen Schnitt durch einen an ein Plastifizieraggregat angeschlossenen Spritzkopf mit einem Umschaltventil zur wahlweisen Leitung der Schmelze zu einer Spritzdüse oder einer Schlitzdüse,
- Fig. 10: den Spritzkopf nach Fig. 9 in der Frontansicht und
- Fig. 11: den Spritzkopf nach den Fig. 9 und 10 in perspektivischer Ansicht.

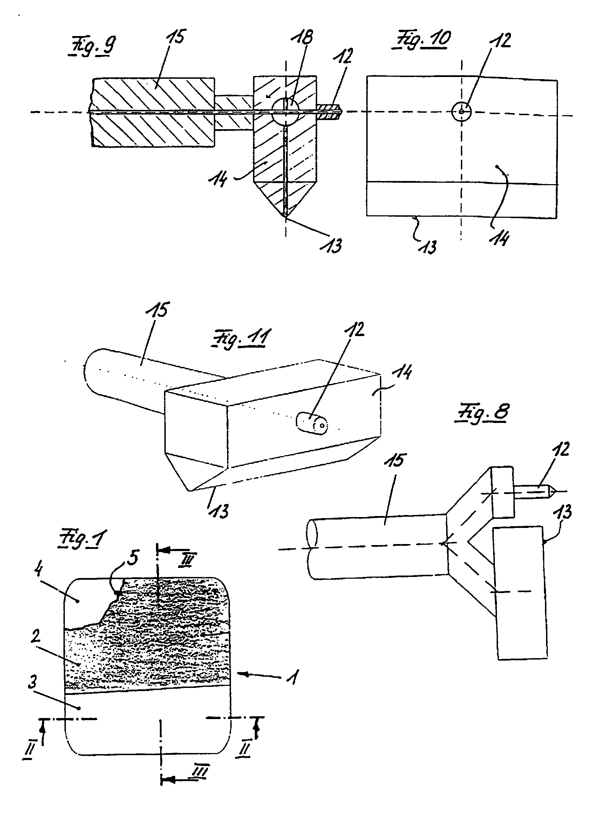

Die Fig. 1 zeigt ein dünnwandiges flächiges Formteil 1 mit einer laminierten Teilfläche 2 und einer unlaminierten Teilfläche 3. Die laminierte Teilfläche 2 besteht aus einer Grundschicht 4 und einer Deckschicht 5. Die Grundschicht 4 und die gesamte unlaminierte Teilfläche 3 bestehen aus einem thermoplastischen Material. Die Deckschicht 5 kann aus einem beliebigen vorgefertigten flexiblen Material, z.B. Gewebe, Kunststoffmaterial mit Lederprägung oder dergleichen bestehen. Besonders vorteilhaft ist ein Aufbau der Deckschicht 5 aus Kunststoffolie z.B. mit lederartiger Oberflächennarbung und einer unteren Polsterungsschicht aus einem nachgiebigen Material wie Schaumstoff. Durch ein Verpressen mit dem noch nicht erstarrten, d.h. zumindest an der Oberfläche noch fließfähigen thermoplstischen Material der Grundschicht, wird die Deckschicht 5 unlösbar mit. der Grundschicht 4 verbunden. Diese Verbindungstechnik wird auch Hinterpreßtechnik genannt, nach der vorzugsweise Innenausrüstungen für Kraftfahrzeuge, wie z.B. Türverkleidungen hergestellt werden.

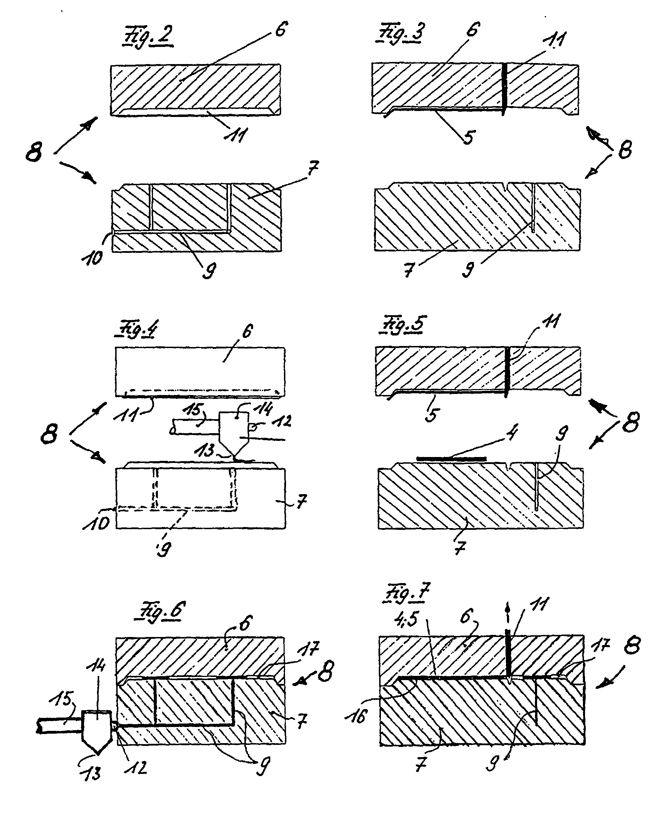

Die Fig. 2 zeigt das aus einer oberen Formhälfte 6 und einer unteren Formhälfte 7 bestehende Formwerkzeug 8. Die untere Formhälfte 7 weist verzweigte Schmelzekanäle 9 mit einer Anspritzöffnung 10 auf. In der oberen Formhälfte 6 ist ein Trennschwert 11 angeordnet. Die Fig. 3 zeigt das geöffnete Formwerkzeug 8 in einer anderen Ansicht mit in der oberen Formhälfte 6 angeordnetem Trennschwert 11 und der Deckschicht 5. In der unteren Formhälfte 7 ist die Einrastkerbe für das Trennschwert 11 ausgebildet.

Die Fig. 4 und 5 stellen das Formwerkzeug nach Fig. 2 und 3 dar, mit einem mit einer Spritzdüse 12 und einer Schlitzdüse 13 ausgestatteten Spritzkopf 14, der an ein Plastifizieraggregat 15 angeschlossen ist. über die Schlitzdüse 13 wird ein Schmelzestrang auf der unteren Formhälfte 7 abgelegt.

Gemäß Fig. 6 ist an die Anspritzöffnung 10 des geschlossenen Formwerkzeugs 8 eine Spritzdüse 12 angesetzt, die über die Schmelzekanäle 9 Kunststoffschmelze in den Formhohlraum 17 (Fig. 7) einspritzt.

Die Fig. 7 zeigt das geschlossene Formwerkzeug 8, dessen Formhohlraum durch das Trennschwert 11 in einen Formhohlraum 16 für die laminierte Teilfläche 2 und in einen Formhohlraum 17 für die unlaminierte Teilfläche 3 unterteilt ist. Das Trennschwert 11 ist dabei bereits teilweise gezogen, so daß die in den Formhohlraum 17 eingespritzte Schmelze sich mit dem Randbereich des bereits fertig mit der Deckschicht 5 laminierten Teilfläche 2 des Formteils 1 verbinden kann.

Die Fig. 8 veranschaulicht ein Plastifizieraggregat 15, dessen Schmelzekanal sich zu einer Spritzdüse 12 und zu einer Schlitzdüse 13 verzweigt.

In den Fig. 9, 10 und 11 ist ein an das Plastifizieraggregat 15 angeschlossener Spritzkopf 14 dargestellt, mit dem mittels eines Umschaltventils 18 die Kunststoffschmelze vom Plastifizieraggregat 15 wahlweise zur Spritzdüse 12 oder zur Schlitzdüse 13 leitbar ist. In einer weiteren Schaltstellung wirkt das Umschaltventil 18 als Sperrventil.

## Patentansprüche

1. Vorrichtung zum Herstellen von dünnwandigen Formteilen (1) bestehend aus laminierten Teilflächen (2) mit einer Grundschicht (4) aus thermoplastischem Kunststoffmaterial und mit der Grundschicht (4) in Hinterpresstechnik verpresster Deckschicht (5) aus vorgefertigtem flächigen Deckschichtmaterial und aus nicht laminierten Teilflächen (3) mittels eines eine untere und eine obere Formhälfte (6,7) aufweisenden Formwerkzeugs (8) und mit Einrichtungen zur Einbringung der mit der Deckschicht (5) zu verpressenden Grundschicht (4) in dünnwandiger flächiger Form, **dadurch gekennzeichnet, dass** an ein Plastifizieraggregat (15) ein mindestens eine Spritzdüse (12) und mindestens eine Schlitzdüse (13) tragender Spritzkopf (14) angeschlossen ist, der ein Umschaltventil (18) aufweist zur wahlweisen Leitung der Schmelze zu jeweils einer Schlitzdüse (13) zur Einbringung der Grundschicht (4) im Formwerkzeug 8 und einer Spritzdüse (12) zum Anspritzen der nicht laminierten Teilflächen (3) an die laminierten Teilflächen (2).

2. Vorrichtung nach Anspruch 1, **dadurch gekennzeichnet, dass** der vom Formwerkzeug (8) umschlossene Formhohlraum in einen oder mehrere Formhohlräume (16) für mit der Deckschicht (5) laminierte Teilflächen (2) und in einen oder mehrere Formhohlräume (17) für nicht mit einer Deckschicht (5) laminierte Teilflächen (3) unterteilt ist, wobei der oder die Formhohlräume (17) für die nicht laminierten Teilflächen (3) jeweils über einen oder mehrere Schmelzekanäle (9) mit einem oder mehreren Spritzdüsen (12) des Plastifizieraggregates (15) verbunden sind.

3. Vorrichtung nach Anspruch 2, **dadurch gekennzeichnet, dass** einer oder mehrere der Schmelzekanäle (9) beheizte Heißkanäle sind.

## Claims

1. Device for producing thin-walled mouldings (1) consisting of laminated partial faces (2) with a base layer (4) made of thermoplastic polymer and an outer layer (5) pressed by the base layer (4) by the rear pressing technique and made of prefabricated plane outer layer material, and of non-laminated partial faces (3), by means of a mould (8) comprising a lower and an upper mould half (6, 7) and with devices for introducing the base layer (4) to be pressed with the outer layer (5) into a thin-walled plane form, **characterised in that** an extrusion head (14) carrying at least one extrusion die (12) and at least one slit die (13) is connected to a plastification unit (15), the extrusion head (14) comprising a change-over valve (18) for selective conveying of the melt to a respective slit die (13) for introducing the base layer (4) in the mould (8) and an extrusion die (12) for spraying the non-laminated partial faces (3) onto the laminated partial faces (2).

2. Device according to claim 1, **characterised in that** the cavity enclosed by the mould (8) is divided into one or more cavities (16) for partial faces (2) laminated with the outer layer (5) and into one or more cavities (17) for partial faces (3) not laminated with an outer layer (5), the cavity or cavities (17) for the non-laminated partial faces (3) each being connected via one or more melt ducts (9) to one or more extrusion dies (12) of the plastification unit (15).

3. Device according to claim 2, **characterised in that** one or more of the melt ducts (9) is/are heated heating ducts.

## Revendications

1. Dispositif de fabrication de pièces moulées à parois minces se composant de surfaces partielles stratifiées (2) avec une couche de base (4) en matériau synthétique thermoplastique et avec une couche de finition (5) comprimée avec la couche de base (4) dans la technique de compression arrière, en matériau de couche de finition plan préfabriqué, et de surfaces partielles non stratifiées (3), par l'intermédiaire d'un moule (8) présentant une moitié de moule inférieure (6) et une moitié de moule supérieure (7) et avec des équipements en vue de l'introduction, sous forme plane à parois minces, de la couche de base (4) à comprimer avec la couche de finition (5), **caractérisé en ce que** l'on raccorde, à une unité de mise en forme plastique (15), une tête d'injection (14) portant au moins une buse de pulvérisation (12) et au moins une buse à fente (13), laquelle tête présente une soupape de commutation (18) en vue de la conduite au choix de la masse fondue à chaque fois à une buse à fente (13), en vue de l'introduction de la couche de base (4) dans le moule (8), et à une buse de pulvérisation (12). en vue de la pulvérisation des surfaces partielles non stratifiées (3) sur les surfaces partielles stratifiées (12).

2. Dispositif selon la revendication 1, **caractérisé en ce que** l'espace creux de moule enclos par le moule (8) est subdivisé en un ou plusieurs espaces creux de moule (16) pour les surfaces partielles (2), non stratifiées avec la couche de finition (5), et en un ou plusieurs espaces creux de moule (17) pour les surfaces partielles (3) non stratifiées avec une couche de finition (5), le ou les espaces creux de moule (17) pour les surfaces partielles non stratifiées (3) étant reliées, à chaque fois, par l'intermédiaire d'un ou de plusieurs canaux à masse fondue (9), à une ou à plusieurs buses de pulvérisation (12) de l'unité de mise en forme plastique (15).

3. Dispositif selon la revendication 2, **caractérisé en ce qu'**un ou plusieurs des canaux à masse fondue (9) sont des canaux chauds chauffés.
